(19) Europäisches Patentamt
European Patent Office
Office européen des brevets

(11) EP 3 112 920 A1

(12) EUROPEAN PATENT APPLICATION

(43) Date of publication:
04.01.2017 Bulletin 2017/01

(51) Int Cl.:
G02B 26/02 (2006.01)          G02B 26/08 (2006.01)
H04N 5/217 (2006.01)          H04N 5/225 (2006.01)
H04N 5/357 (2011.01)

(21) Application number: 15306059.5

(22) Date of filing: 30.06.2015

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA

(71) Applicant: Thomson Licensing
92130 Issy-les-Moulineaux (FR)

(72) Inventors:
• BOREL, THIERRY
35576 CESSON SEVIGNE CEDEX (FR)
• DRAZIC, VALTER
35576 CESSON SEVIGNE CEDEX (FR)

(74) Representative: Huchet, Anne
TECHNICOLOR
1-5, rue Jeanne d'Arc
92130 Issy-les-Moulineaux (FR)

(54) PLENOPTIC CAMERA COMPRISING AN ANTI-VIGNETTING OPTICAL FILTER AND METHOD F CONTROLLING THE SAME

(57) An optical assembly of a plenoptic camera (1) comprises an optical filter (14) arranged in the aperture stop plane of the camera lens (10), also called main lens or primary lens, of the optical assembly that may be used in the plenoptic camera. The optical filter (14) has advantageously a transmittance that varies spatially according to information representative of transmittance associated with the camera lens (10).

Fig 1

EP 3 112 920 A1

**Description**

**1. Technical domain**

The present disclosure relates to the domain of plenoptic camera and more specifically to the domain of optical assembly for plenoptic camera.

**2. Background art**

According to the background art, it is known to acquire different views of a same scene with a plenoptic camera, also called light-field camera. To obtain the different views, a raw image (comprising the data collected by a photosensor array of the plenoptic camera) is demosaiced and de-multiplexed. The demosaicing enables to recover a full color raw image, i.e. to recover full color information (for example RGB information, RGB standing for "Red", "Green" and "Blue") for the pixels of the raw image while the raw image acquired with the plenoptic camera associates only one color component (R, G or B for example) with each pixel. The demultiplexing performed after the demosaicing enables to recover the different views of the scene, i.e. to group the pixels of the demosaiced raw image according to the view to which they belong.

A classical problem occurring in all cameras (including 2D cameras and plenoptic cameras) is vignetting. This phenomenon comes from optical lens imperfections, which leads in having less refracted light energy for higher incidence angles. With 2D cameras, the result is just a brightness non-uniformity of the image, corners being darker than the center. With plenoptic cameras, some of the views, e.g. outer views, may be unusable since they are too dark compared to other views, e.g. center views.

**3. Summary**

References in the specification to "one embodiment", "an embodiment", "an example embodiment", indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

The present disclosure relates to a plenoptic camera comprising a camera lens, a microlens array and a photosensors array. The camera lens comprises an optical filter arranged in the aperture stop plane of the camera lens, the optical filter having a transmittance that varies spatially according to information representative of a transmittance associated with the camera lens.

Advantageously, the optical filter is a passive optical filter.

According to a particular characteristic, the optical filter is a spatial light modulator.

Advantageously, the spatial light modulator comprising a plurality of cells, the plenoptic camera further comprises a controller for controlling a quantity of light passing through the cells according to the information representative of transmittance associated with the camera lens.

According to a specific characteristic, the plenoptic camera comprises a memory for storing the information representative of transmittance associated with the camera lens.

Advantageously, for a given point of the optical filter, the transmittance associated with the given point depends from a distance between the given point and a center of the optical filter.

According to a specific characteristic, the transmittance increases with the distance.

The present disclosure also relates to a method of controlling the quantity of light reaching a photosensor array of a plenoptic camera, the plenoptic camera comprising a camera lens, and a microlens array, the method comprising controlling a transmittance associated with an optical filter arranged in the aperture stop plane of the camera lens according to information representative of transmittance associated with the camera lens.

Advantageously, the controlling function comprising controlling a quantity of light passing through cells of a spatial light modulator according to the information representative of a transmittance associated with the camera lens.

According to a specific characteristic, the method comprises comprising storing the information representative of a transmittance associated with the camera lens.

The invention also relates to a telecommunication device comprising the plenoptic camera.

The invention also relates to a computer program product comprising instructions of program code for executing at least a step of the method of controlling a plenoptic camera, when the program is executed on a computer.

The invention also relates to a non-transitory processor readable medium having stored therein instructions for causing a processor to perform at least a step of the method of controlling a plenoptic camera.

## 4. List of figures

The present disclosure will be better understood, and other specific features and advantages will emerge upon reading the following description, the description making reference to the annexed drawings wherein:

- figure 1 shows a plenoptic camera, according to a particular embodiment of the present principles;
- figure 2 shows the travel of light rays in the plenoptic camera of figure 1, according to a particular embodiment of the present principles;
- figure 3 shows the projection of the photosensors of the photosensors array of the plenoptic camera of figure 1 onto the aperture stop plane of the plenoptic camera of figure 1, according to a particular embodiment of the present principles;
- figure 4 shows an optical filter of the plenoptic camera of figure 1, according to a first example of the present principles;
- figure 5 shows an optical filter of the plenoptic camera of figure 1, according to a second example of the present principles;
- figure 6 shows photosensors under a microlens of the microlens array of the plenoptic camera of figure 1 or a matrix of views acquired with the plenoptic camera of figure 1, according to a particular embodiment of the present principles;
- figure 7 shows a method of controlling the plenoptic camera of figure 1, according to a particular embodiment of the present principles;
- figure 8 shows a telecommunication device comprising the plenoptic camera of figure 1, according to a particular embodiment of the present principles.

## 5. Detailed description of embodiments.

The subject matter is now described with reference to the drawings, wherein like reference numerals are used to refer to like elements throughout. In the following description, for purposes of explanation, numerous specific details are set forth in order to provide a thorough understanding of the subject matter. It can be evident, however, that subject matter embodiments can be practiced without these specific details.

According to a particular embodiment of the present principles, the optical assembly of a plenoptic camera comprises an optical filter arranged in the aperture stop plane of the camera lens (also called main lens or primary lens) of the optical assembly that may be used in a plenoptic camera. The optical filter has advantageously a transmittance that varies spatially according to information representative of transmittance associated with the camera lens. For sake of simplicity, drawings illustrate only one lens to illustrate the main lens. It is naturally understood that the main lens may correspond to a set of several lenses.

It is understood with aperture stop plane of the camera lens the plane of the physical device(s) (lens(es) and/or a diaphragm) that limit the cone of light passing through the camera lens. The plane of the aperture stop is a determined plane (depending from the design of the camera lens) where a diaphragm or more generally speaking an aperture stop would be positioned to limit the cone of light passing through the camera lens.

The use of an optical filter having a transmittance that varies spatially according to information representative of transmittance associated with the camera lens enables to homogenize the quantity of light exiting the camera lens, thus reducing or removing the vignetting effect.

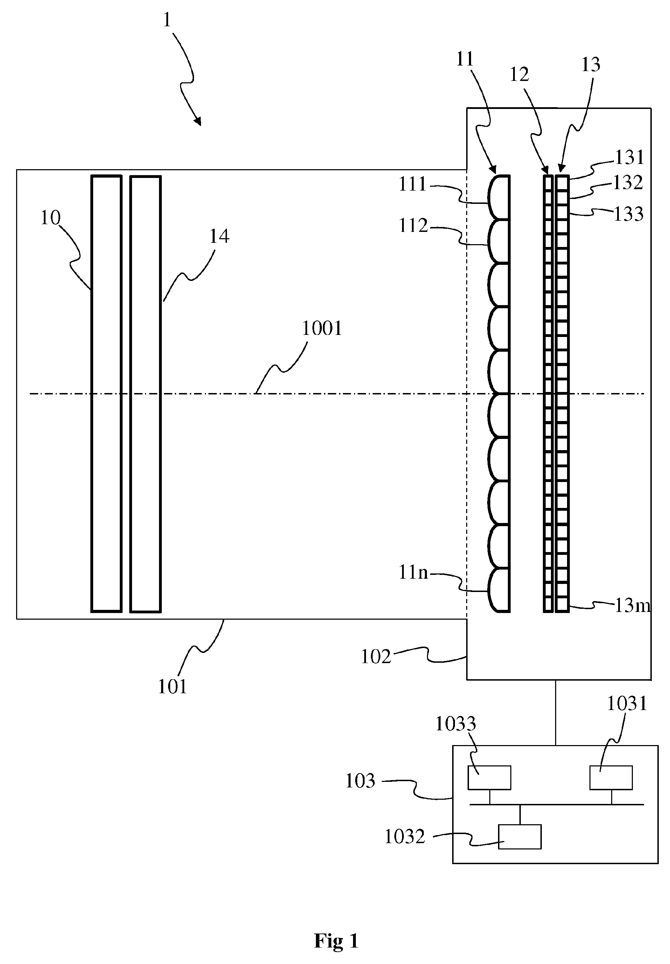

**Figure 1** shows a plenoptic camera 1 according to a particular embodiment of the present principles. The plenoptic camera comprises a lens unit 101 (corresponding to an optical assembly) and a camera body 102.

The lens unit 101 is advantageously adapted to be associated with the camera body 102. The camera body 102 comprises a photosensors array 23, which comprises a plurality m of photosensors 131, 132, 133 to 13m. Each photosensor corresponds to a pixel of the raw image of the scene acquired with the photosensor array, with each pixel encompassing a part (also called a point) of the scene. For purposes of illustration, the photosensor array 13 is shown with a relative small number of photosensors 131 to 13m. Naturally, the number of photosensors is not limited by the illustration of figure 1 but extends to any number of photosensors, for example several thousand or several millions of photosensors. For example in a 12.4 megapixel camera, a pixel will correspond to a photosensor (e.g. corresponding to an array of 4088 x 3040 pixels / photosensors). A color filter array (CFA) 12 may be arranged on the photosensors array 13. The CFA 12 typically arranges RGB (Red, Green and Blue) color filters on the photosensor array, the RGB arrangement taking for the example the form of a Bayer filter mosaic. According to a variant, a CFA is arranged on the microlens array 11, also called lenslet array, (in addition to the CFA 12 or in replacement of the CFA 12).

The camera body 102 also comprises a microlens array 11 comprising n microlenses 111, 112 to 11 n, n being an integer greater than or equal to 2. For purposes of illustration, the microlens array 11 is shown with a relative small number of microlenses, but the number of microlenses may extend up to several thousand or even one or several million of microlenses. A group of photosensors of the photosensor array 13 are optically associated with each microlens 111 to 11 n of the microlens array 11. For example, each microlens 111 to 11 n of the microlens array 11 is sized to correspond to an array of 2x1, 4x4 or 10x10 photosensors. A group of photosensors associated with a microlens (or said differently, a group of photosensors under the microlens) form a micro-image associated with this microlens, each photosensor of the group of photosensors forming a pixel of the micro-image. Each photosensor of the plurality of photosensors optically associated with one single microlens enables to acquire raw data representative of a pixel of the scene according to one position (acquisition of as many parallaxes as pixels).

For associating the lens unit 101 with the camera body 102, the lens unit 101 comprises a first attaching part and the camera body 102 comprises a second attaching part, the first and second attaching parts being compatible with each other. Thanks to the first and second attaching parts, the lens unit 101 may be clipped onto the camera body 102 or the lens unit 101 may be screwed with the camera body 102. An example of such first and second attaching parts of a lens unit configured to be associated with a camera body may be found in the Japanese patent application JP2013-105151 A, which was published on May 30, 2013. The first and second attaching parts are configured in such a way that, once the lens unit 101 and the camera body 102 have been put together, the lens unit 101 and the camera body 102 form a plenoptic camera configured for acquiring multiple views of a scene at each acquisition of the scene. According to a variant, the lens unit 101 and the camera body 102 collectively form one single body and are assembled without being detachable.

The lens unit 101 comprises a camera lens 10, also called a main lens or primary lens, which is advantageously formed of one or more lens elements, only one lens element 10 being depicted in figure 1 for clarity purpose. The camera lens 10 also comprises an optical filter 14 arranged in the aperture stop plane of the camera lens 10. The optical filter 14 corresponds for example to a passive optical filter or to an active optical filter, such as a Spatial Light Modulator (SLM) for example. The optical filter 14 is designed and/or controlled to adjust the transmittance spatially in such a way that the amount of light exiting the camera lens 10 is spatially homogeneous, i.e. the amount of light is essentially the same in each point at the output of the camera lens. It is understood with "essentially the same" that a variation comprised between 0 and a few percent (for example 1, 2, 5 or 10 %) may be observed between the minimal value and the maximum value of the amount of light.

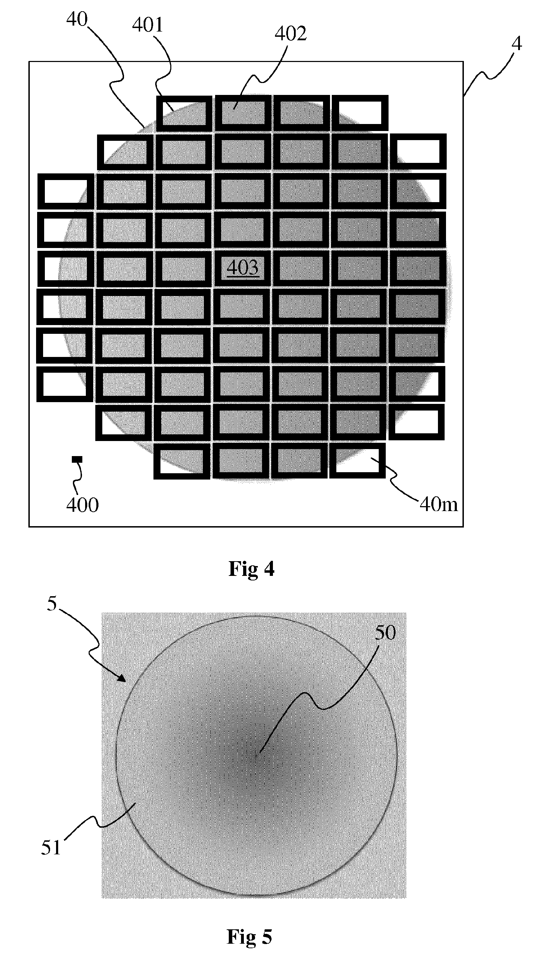

A passive optical filter corresponds for example to a device comprising a translucent medium in which a light-blocking material is dissolved for filtering incident light reaching the optical filter. The density of the translucent materials may vary spatially to adjust the transmittance over the surface of the optical filter to determined values. The variable density may be achieved by varying the thickness of some metallic evaporated material like silver or aluminum for example. According to a variant, the variable density may be obtained with a stack of thin layers (for example 20 to 100 layers) of alternating material whose thickness is locally varying, achieving a dichroic filter whose reflectance is varying. The transmittance values are for example determined during the calibration of the plenoptic camera by using information representative of the transmittance of the camera lens, as explained for example with more details herein below with regard to figure 5. According to another example, the passive optical filter is a passive plastic sheet.

An active optical filter corresponds for example to a device, the transmittance of which being controllable over the time. According to a first example, the active optical filter corresponds to an optical device comprising a translucent medium in which a light-blocking material is dissolved for filtering incident light reaching the optical filter. The thickness of such an optical device is advantageously adjustable, which enables to adjust the thickness of the path that the light rays reaching the optical device have to follow to pass through the optical device. The thickness may be advantageously different from a point to another point of the optical filter to spatially control the transmittance of the optical filter. The thickness, corresponding to a dimension substantially parallel to the optical axis 1001 of the camera lens 10, is controlled via a controller, for example the module 103, for example using piezoelectric force and/or magnetic force. Such an optical device is for example described in WO 2008/026160 A1 published on 06 March 2008. According to a second example, the active optical filter corresponds to a Spatial Light Modulator (SLM). The SLM advantageously corresponds to an array of cells, each cell being configured to either let the light passing through it (partially or completely) or to block the light. Each cell is controllable to be either in a first state corresponding to the state where the cell blocks the light reaching it or in a second state corresponding to the state where the cell lets the light passing through it, at least partially. If the SLM corresponds to a LCD panel, each cell corresponds to a pixel comprising a layer of liquid-crystal molecules aligned between electrodes and two polarizing filters, the orientation of the liquid-crystal molecules being controlled by applying an electric field between the electrodes. By controlling the amplitude of the voltage applied across the liquid crystal layer, light may be allowed to pass through in varying amounts or not allowed to pass through at all. Generally speaking, it is understood that a SLM comprises a device that imposes some form of spatially varying modulation on a beam of light, typically spatially modulating the intensity of the light beam passing through the SLM. The SLM may be for example any transmissive display panel, e.g. a transmissive LCoS (Liquid Crystal on Silicon) display or a LCD (Liquid-Crystal Display) panel.

The plenoptic camera 2 advantageously comprises a hardware module 203 configured for controlling the plenoptic camera, for example for controlling the transmittance of the optical filter 14, for example spatially over the surface of the optical filter. The module 203 is further configured for detecting a change in one or more parameters of the camera lens 20, for example a change of the focal length of the camera lens and/or a change of the focussing distance occurring when focalizing or zooming. The module may be comprised in the camera body 102 or in the lens unit 101. The module advantageously comprises one or several processors 1031 associated with a memory, for example a Random Access Memory or RAM 1032 comprising one or more registers. The memory stores instructions of one or more algorithms implementing the method of controlling the plenoptic camera 1. According to a variant, the module takes the form of a programmable logical circuit of type FPGA (Field-Programmable Gate Array) for example, ASIC (Application-Specific Integrated Circuit) or a DSP (Digital Signal Processor). The module comprises a power source 2033 comprising for example a variable voltage source capable of applying various voltages to the optical filter to control it. The power source is advantageously controlled by the processor 2031. The module may also comprise an interface configured to receive and transmit data such as control parameters input by a user via a user interface to set the plenoptic camera 1, the user interface being for example displayed on a display screen (for example a LCD or an OLED display) arranged for example on the camera body 102.

According to a variant, the module is not comprised in the plenoptic camera but connected to the plenoptic camera via a wired connection (for example via USB (Universal Serial Bus)) or via a wireless connection (for example via Bluetooth, Wi-Fi or ZigBee). According to this variant, the module advantageously comprises a transmitter to exchange data with the plenoptic camera. According to this variant, the power source 1033 is comprised in the plenoptic camera 1.

The plenoptic camera 1 is equally of the type 1.0, corresponding to a plenoptic camera wherein the distance between the microlens array 11 and the photosensor array 13 is equal to the microlenses focal length, or of the type 2.0 otherwise (also called focused plenoptic camera).

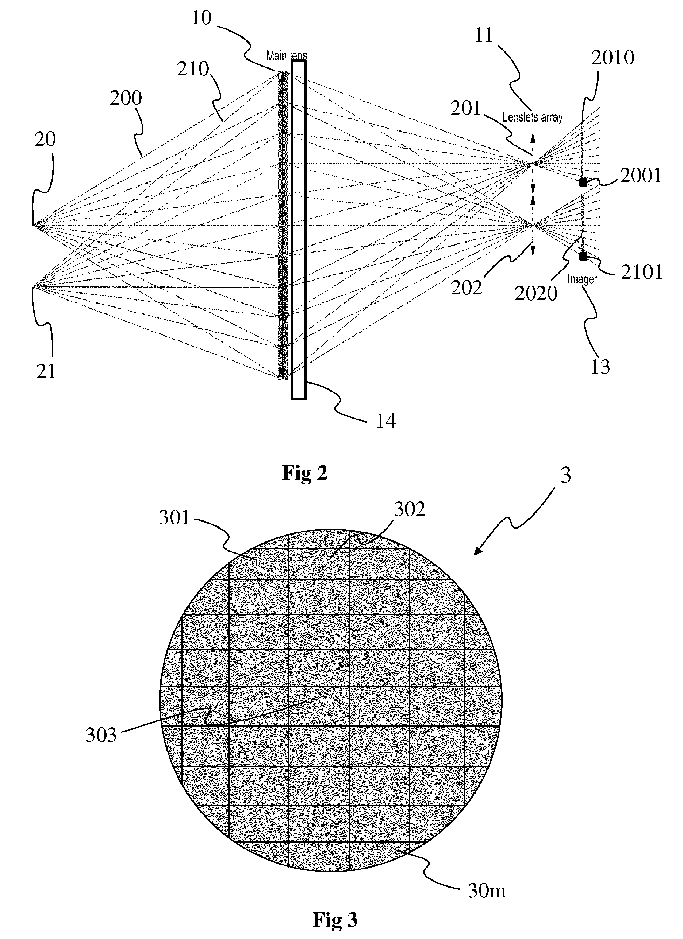

**Figure 2** shows light rays bundles passing through the camera lens of the plenoptic camera 1 to reach the photosensors array 13, according to a particular embodiment of the present principles.

As illustrated on figure 1, a group of photosensors of the photosensors array 13 is optically associated with each microlens of the lenslet array 11. For example, on figure 2, the group of photosensors 2010 is associated with the microlens 201 and the group of photosensors 2020 is associated with the microlens 202. Each group of photosensors associated with a microlens corresponds to a micro-image associated with the corresponding microlens. The number of views of a same point 20, 21 of the scene acquired with the plenoptic camera 1 corresponds to the number of photosensors optically associated with one microlens as, thanks to the geometry of the microlens, a same point of the scene is viewed according to different angles. This means that each photosensor optically associated with a given microlens acquires data representative of a specific view of a point of the scene. The number of views of the scene acquired with the plenoptic camera corresponds to the number of pixels associated with each (i.e. under each) microlens of the lenslet array 11. The number of photosensors optically associated with one microlens is advantageously the same for each microlens of the lenslet array 11. As illustrated on figure 2, the ray of light 200 coming from the acquired scene, from the point 20 more specifically, passes through the camera lens 10, the optical filter 14 and the lenslet array 11 before reaching the photosensors array 13, i.e. the photosensor 2001 of the group 2010. In a same way, the ray of light 210 coming from the acquired scene, from the point 21 more specifically, passes through the primary lens 10, the optical filter 14 and the lenslet array 11 before reaching the photosensors array 13, i.e. the photosensor 2101 of the group 2020. Light rays 200 and 201 are called input light rays before they pass through the optical filter 14 and are called output light rays once they have passed through the optical filter 14. The intensity of the output light rays reaching the photosensors array may be reduced in comparison to the intensity of the input light ray, depending on the transmittance value associated with the area of the optical filter 14 crossed by the light rays 200, 210. The amount of light reaching a given photosensor of a group of photosensors 2010, 2020 is advantageously controlled with the optical filter, depending of the transmittance values associated with the different areas of the optical filter 14.

Different views of the scene are obtained by demultiplexing and demosaicing the raw image of the scene, pixels of the raw image corresponding to the photosensors of the photosensors array 13. To obtain a determined view, the pixels of this determined view are collected from the raw image. For example, pixels associated with the photosensors 2001 and 2101 belong to a same view as they are located in a same position relatively to the center of the group of photosensors they each belong to, i.e. the groups 2010 and 2020 respectively, as it will be recognized by the skilled person in the art. As can be seen on figure 2, the light rays associated with pixels/photosensors of a same view of the scene cross the optical filter in a same area, such areas being illustrated on figure 3.

Naturally, the number of photosensors of the groups of photosensors 2010, 2020 respectively associated with the microlenses 201 and 202 is not limited to the number n of photosensors illustrated on figure 2 each corresponding to a different view of the points 20 and 21 respectively but advantageously extends to a number greater than n. The photosensors belonging to the groups of photosensors 2010, 2020 and not illustrated on figure 2 advantageously receive light information received from points of the scene different from the points 20 and 21.

**Figure 3** illustrates the projection of the photosensors of the photosensors array 13, along the light rays 200, 210 onto the aperture stop plane of the main lens 10 of the plenoptic camera 1, according to a particular embodiment of the present principles. In other words, figure 3 illustrates the views of the scene that may be obtained when demultiplexing the raw image acquired with the plenoptic camera 1, these views being represented on the aperture stop plane of the camera lens 10.

The collection of views 3 takes the general form of the main lens 10, i.e. circular. The optical filter being arranged in the aperture stop plane of the camera lens, figure 3 advantageously illustrated the areas of the optical filter 13 covered by each view of the scene. A number m of areas 301, 302, 303 to 30m may be found on the optical filter. The number m of areas (or views) corresponds to the number of photosensors comprised in a group of photosensors 2010, 2020 associated with one microlens. Each area 301 to 30m corresponds to a set of photosensors, one photosensor being collected in each group of photosensors 2010, 2020. A given area 303 collects the projections of one unique photosensor in each group of photosensors, the photosensors projecting in the given area 303 having identical coordinates (e.g. line number and column number) in the group of photosensors to which they belong. For example, if the area 303 corresponds to the center view, the photosensors projecting into this given area 303 correspond to the photosensors located at the center of each group of photosensors 2010, 2020. The projection points (corresponding to pixels) of photosensors in one area (or view) are arranged in this area according to the relative position of the micro-images (i.e. group of photosensors) on the photosensors array. The micro-images formed on the photosensors array 13 form a matrix of micro-images arranged in rows and columns, an index for the row and an index for the column being associated with each micro-image. The indices of the projection point/pixel within a given area (i.e. an index for the row and an index for the column to which the projection point/pixel belongs), for example the area 303, corresponds to the indices associated with the micro-image to which belongs the photosensor corresponding to the projection point/pixel.

Figure 4 shows an optical filter in the form of an SLM 4 corresponding to the optical filter 14 of the plenoptic camera 1, according to a first example of the present principles. The optical filter 4 corresponds advantageously to a spatial light modulator (SLM).

The SLM 4 comprises a plurality of cells 400 and corresponds for example to an array of columns and rows of cells. Part of the cells of the SLM 4 are grouped to form m group of cells 401, 402, 403, 40m, the number m of group of cells being equal to the number m of views of the collection of views 3, i.e. being equal to the number m of photosensors forming each group of photosensors 2010, 2020 under each microlens 201, 202. A determined group of cells is associated with one view, advantageously for each view of the collection 3. For example, the group of cells referenced 403 is associated with the view 303 of the collection 3, i.e. the group of cells 403 covers the projection of the photosensors forming the view 403. Said differently, the group of cells 403 is associated with one view, i.e. the light rays passing through this group of cells 403 each reach one of the photosensors used to obtain the view 303 when demultiplexing the views from the raw image The cells of the SLM 4 are grouped in order to cover each view of the collection 3, i.e. the boundaries of a group of cells correspond to the boundaries of the projection of the photosensors (onto the aperture stop plane) forming the corresponding view. Each cell 400 of the SLM 40 is able to switch between two different state, i.e. either a first state wherein the cell blocks the light arriving to it from the scene or in a second state wherein the cell lets the light arriving to it passing through it, partially or totally. By controlling the state of the cells of a group of cells associated with a determined photosensor of the photosensors array, it is then possible to control the transmittance of this group of cells and thus to control the amount of light reaching the photosensors associated with this group of cells. Such a control may be performed for each group of cells of the SLM 4 and thus for each photosensor of the photosensors array, which enables to acquire all the views of the scene by ensuring that the amount of light reaching the photosensors of the photosensor array is essentially the same.

Advantageously, the transmittance of a group of cells is obtained by setting the amount of light passing through each cell in such a way is the same. When the SLM 4 is a LCD for example, such a setting is obtained by applying a same voltage to each cell forming the considered group of cells.

According to a variant, the cells are controlled individually, the transmittance values associated with the cells of a same group of cells may be different, i.e. the voltages applied to the cells forming the considered group of cells may be different when the SLM is a LCD for example.

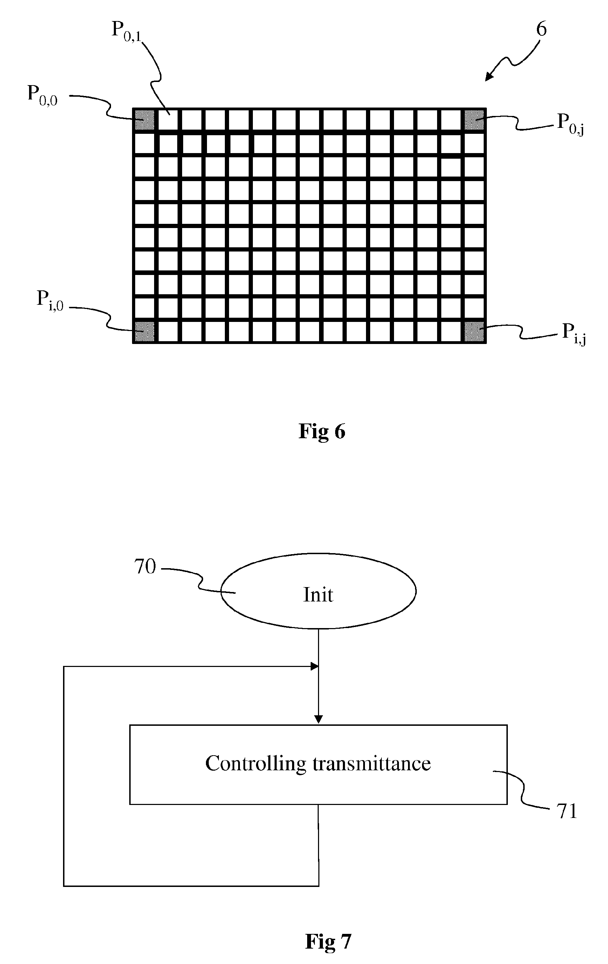

The transmittance values associated with each group of cells and/or with each cell are for example obtained as explained with regard to figure 6.

**Figure 5** shows an optical filter 5 corresponding to the optical filter 14 of the plenoptic camera 1, according to a second example of the present principles. The optical filter 5 corresponds advantageously to an optical filter comprising a translucent medium in which a light-blocking material is dissolved for filtering incident light reaching the optical filter, the optical filter 5 may be passive or active, active meaning that the transmittance values of the optical filter may be controlled and adjusted over the time.

The transmittance of the optical filter is advantageously not constant over the surface of the optical filter 5, meaning that the transmittance varies spatially over the surface. Different values of the transmittance may be obtained by adjusting the density and/or thickness distribution of the light-blocking material. To obtain a homogeneous distribution of the light reaching the photosensors array 13, the transmittance is less for points of the optical filter close to the center 50 of the optical filter 5 than for points close to the peripheral part 51 of the optical filter 5.

Different values of the transmittance are for example associated with different areas of the optical filter 5. The different areas may be defined to correspond to the different views of the collection 3, as explained with regard to figure 5. According to another example, the transmittance may increase gradually, for example proportionally, with the distance from the center 50.

The transmittance values associated with the different parts or points of the optical filter 5 are for example obtained as explained with regard to figure 6.

**Figure 6** shows a micro-image 6 under a microlens of the microlens array of the plenoptic camera 1, according to a first particular embodiment of the present principles. The micro-image 6 comprises pixels that correspond to the photosensors of the photosensors array optically associated with the microlens to form a micro-image. The form of the micro-image depends on the form of the associated microlens and may be for example circular. In the non-limitative example of figure 6, the form of the micro-image 6 is rectangular. The micro-image 6 comprises rows and columns of pixels, an index being associated with each row (from 0 to i for example, 0 for the upper row and i for the lower row) and with each column (from 0 to j for example, 0 for the most left column and j for the most right column). The number of pixel forming the micro-image is advantageously equal to m, i.e. the number of photosensors of each group of photosensors 2010, 2020. Each pixel is identified with the row and column indices to which it belongs. For example, the upper left pixel $P_{0,0}$ is identified with its indices (0, 0) and the lower right pixel $P_{i,j}$ is identified with indices (i, j).

To obtain the transmittance values associated with the different parts/areas of the optical filters 4 or 5, the optical filter is first either removed (when the optical filter is a passive optical filter) or controlled in such a way that the transmittance is 1 for each and every part/area/point of the optical filter (when the optical filter is an active optical filter, i.e. an optical filter with adjustable transmittance).

Then, a white image is acquired with the plenoptic camera. According to a variant, different white images are acquired with the plenoptic camera, for example a white image for a different focus and/or zoom value of the camera lens 10.

The amounts of light reaching the photosensors when acquiring the one or more white images are measured. Measuring the amount of light reaching the photosensor without the optical filter 14 (or with the optical filter with a transmittance equal to 1, i.e. letting 100 % of the light reaching it passing through it, enables to determine the transmittance of the camera lens 10. The information representative of transmittance of the camera lens may correspond to the amount of light reaching the photosensors array. The amount of light reaching the photosensor $P_{0,0}$ is denoted $L_{0,0}$, the amount of light reaching the photosensor $P_{0,1}$ denoted $L_{0,1}$, the amount of light reaching the photosensor $P_{o,j}$ is denoted $L_{0,j}$, the amount of light reaching the photosensor $P_{i,0}$ is denoted $L_{i,0}$, and the amount of light reaching the photosensor $P_{i,j}$ is denoted $L_{i,j}$. The maximum amount of light is measured around the center of the micro-image, i.e. for the pixel $P_{(i+1)/2, (j+1)2}$ or for the pixels adjacent to the pixel $P_{(i+1)/2, (j+1)2}$. The minimum amount of light is measured for the pixel or pixels of the micro-image located the furthest from the centre pixel $P_{(i+1)/2, (j+1)2}$, i.e. for the pixels $P_{0,1}$, $P_{0,j}$, $P_{i,0}$ and $P_{i,j}$.

The pixel for which the received amount of light is minimal is selected as a reference pixel. Considering as an example that the reference pixel for which the amount of light is minimal is the pixel $P_{0,1}$. As each pixel of the micro-image 6 belongs to a different view, the transmittance $T_{ref}$ of the area of the optical filter associated with the view comprising the reference pixel $P_{0,1}$ is set to the value 1. The transmittance value T to associate with another given area of the optical filter is equal to the ratio of the amount of light measured for the pixel of the view associated with the another given area divided by the amount of light received by the reference pixel. For example, the transmittance associated with the area (or group of cells) 403 associated with the view 303 that comprises the pixel $P_{(i+1)/2, (j+1)2}$ is equal to:

$$T = \frac{L_{(i+1)/2,(j+1)/2}}{L_{0,1}} \times T_{ref} \qquad\qquad \text{Equation 1}$$

According to a variant, several pixels are selected as reference pixels, for example the pixels $P_{0,1}$, $P_{0,j}$, $P_{i,0}$ and $P_{i,j}$. The reference transmittance value '1' is set for the areas of the optical filter associated with the views each comprising one of the reference pixels $P_{0,1}$, $P_{0,j}$, $P_{i,0}$ and $P_{i,j}$. The transmittance value T to associate with another given area of the optical filter is equal to the ratio of the amount of light measured for the pixel of the view associated with the another given area divided by the average of the amounts of light received by the references pixels. For example, the transmittance associated with the area (or group of cells) 403 associated with the view 303 that comprises the pixel $P_{(i+1)/2, (j+1)2}$ is equal to:

$$T = \frac{L_{(i+1)/2,(j+1)/2}}{(L_{0,1} + L_{0,j} + L_{i,0} + L_{i,j})/4} \times T_{ref} \qquad\qquad \text{Equation 2}$$

Naturally, the number of reference pixels is not limited to 4 or 1 but may be extended to 2, 3 or even more. For example, the pixels belonging to the rows and columns forming the external boundaries of the micro-image may be selected as reference pixels.

According to a variant, the transmittance values associated with the different cells or points of the optical filter are determined via an equation determined from the minimum and maximum values of light amount received by the photosensors array. The transmittance of the cell(s) or point(s) of the optical filter located the furthest from the center of the optical filter is set to 1. The transmittance of the center cell or point of the optical filter is set to the value T obtained from equation 1, which is the minimal transmittance value. The transmittance value associated with another other cell or point of the optical filter is obtained by using the distance $d_1$ separating the cell or point having the maximum transmittance value (i.e. '1') the distance $d_2$ separating this another cell or point from the center of the optical center and by using the transmittance value $T_{center\ cell}$ associated with the center of the optical filter, for example. The transmittance T to associate with any other cell or point may be obtained for example with:

$$T = \frac{d_1}{d_2} \times T_{center\ cell} \qquad\qquad \text{Equation 3}$$

When different white images are acquired, each with specific focus and/or zoom setting values for the camera lens, different set of transmittance values are obtained (one set of transmittance values for each white image) according to the amount of light passing through the main lens and reaching the photosensors array, i.e. according to information representative of the transmittance associated with the camera lens 10. These different sets of transmittance are advantageously stored with the specific focus and/or zoom setting values associated with them. When using the plenoptic camera 1, the optical filter is advantageously controlled according to the focus/zoom parameter currently used, the transmittance associated with the different areas or points of the optical filter are set to the values stored and corresponding to the set focus/zoom parameter(s) of the camera lens 10. This enables to obtain a homogeneous spatial distribution of the light reaching the photosensors array, i.e. the amount of light reaching the photosensors array is essential the same for most or all of the photosensors of the photosensors array (i.e. with for example a variation less than 3%, 5%, or 10% around the average quantity of light measured by the photosensors array).

Figure 6 may also show a matrix 6 of views obtained when demultiplexing of a raw image obtained when acquiring a white image with the plenoptic camera 1, according to a second particular embodiment of the present principles. The matrix 6 comprises rows and columns of m views, an index being associated with each row (from 0 to i for example, 0 for the upper row and i for the lower row) and with each column (from 0 to j for example, 0 for the most left column and j for the most right column). The number of views forming the matrix is advantageously equal to m, i.e. the number of photosensors of each group of photosensors 2010, 2020. Each view is identified with the row and column indices to which it belongs. For example, the upper left view comprising the pixel $P_{0,0}$ of the first embodiment is identified with its indices (0, 0) and the lower right view comprising the pixel $P_{i,j}$ is identified with indices (i, j).

To determine the transmittance values to associate to the different areas/cells/points of the optical filter 14, the same process as the one described herein above with figure 6, first embodiment is used. One or more reference views is/are selected according to this second embodiment, the selected view(s) corresponding to the views for which the received amount of light is the lowest. The amount of light received by a view may correspond to the sum of amount of light received by all photosensors forming the view or by the average of the amounts of lights received by all photosensors forming the view. In a same way than for the first embodiment of figure 6, the transmittance value to associate to the area(s) of the optical filter associated with the selected view(s) is set to 1 and the other transmittance values associated with the other areas are determined as explained with regard to the first embodiment of figure 6.

**Figure 7** shows a method of controlling the quantity of light reaching the photosensors array of the plenoptic camera 1, according to a particular embodiment of the present principles.

During an initialisation step 70, the different parameters of the plenoptic camera, notably the parameters used to control the optical filter 14, are updated. In particular, the transmittance values are initialised in any way, for example set to '1'.

Then during a step 71, the transmittance of the different spatial parts or areas of the optical filter forming the optical filter are controlled according to information representative of the transmittance of the camera lens. When the transmittance of the camera lens 10 is fixed and constant over the time, controlling the optical filter may mean arranging a passive optical filter in the aperture stop plane of the camera lens 10, the optical filter being chosen according to the transmittance of the camera lens 10. The optical filter is advantageously chosen as being the optical filter with a distribution of its transmittance over its surface enabling to obtain a homogeneous and essentially constant distribution of the amount of light outputting it and reaching the photosensors array. When the optical filter 14 is an active optical filter, i.e. an optical filter with a spatially controllable transmittance, for example a SLM, the different cells or parts of the optical filter are controlled to let a determined percentage of the light reaching them passing through them (or in other words the transmittance values of the different cells or parts are controlled to determined values). The determined values are chosen to obtain a homogeneous and essentially constant distribution of the amount of light outputting the optical filter and reaching the photosensors array.

The information representative of transmittance of the camera lens corresponds for example to the amount of light reaching the photosensors array when no optical filter is arranged in the camera lens or when the transmittance of the optical filter 14 is set to 1 over the whole surface of the optical filter 14. According to another example, the information representative of transmittance of the camera lens corresponds to transmittance values obtained for example from equations 1, 2 or 3. According to a further example, the information representative of transmittance of the camera lens corresponds to transmittance values (each transmittance value being associated with a given spatial area (a point or a set of points) of the aperture stop plane of the camera lens or any plane orthogonal to the optical axis) of the camera lens stored in a memory of the plenoptic camera or in a remote storage device, these transmittance values being for example stored by the manufacturer of the camera lens, for example for different focusing and/or zooming settings. When stored in a remote storage device, the transmittance values of the camera lens are advantageously received by the plenoptic camera, when controlling the optical filter 14, via wireless or wired communication link.

When the transmittance of the camera lens changes, for example when zooming and/or focusing, the transmittance of the optical filter is advantageously changed accordingly, the change of transmittance being implementing spatially, i.e. the different parts or areas of the optical filter are controlled individually, for example set to different values of transmittance. Naturally, some of the different parts or areas may be set to a same value of transmittance.

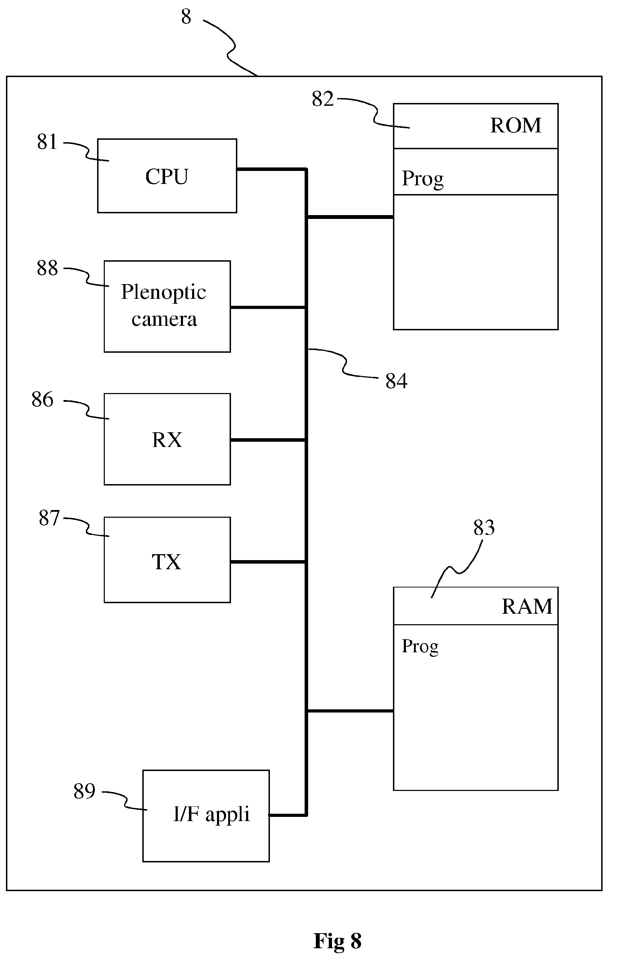

**Figure 8** diagrammatically illustrates a hardware embodiment of a telecommunication device 8, corresponding for example to a smartphone or a tablet.

The telecommunication device 8 comprises the following elements, connected to each other by a bus 84 of addresses and data, that also transports a clock signal:

- a microprocessor 81 (or CPU),
- a non-volatile memory of ROM (Read Only Memory) type 82,
- a Random Access Memory or RAM 83,
- a radio interface 86,
- an interface 87 adapted for the transmission of data,
- a plenoptic camera 88, corresponding for example to the plenoptic camera 1 of figure 1,
- an MMI interface 89 adapted for displaying information for a user and/or inputting data or parameters.

It is noted that the word "register" used in the description of memories 82 and 83 designates in each of the memories mentioned, a memory zone of low capacity as well as a memory zone of large capacity (enabling a whole programme to be stored or all or part of the data representing data received and decoded).

The memory ROM 82 comprises in particular a "prog" program.

The algorithms implementing the steps of the method specific to the present disclosure and described below are stored in the ROM 82 memory associated with the telecommunication device 8 implementing these steps. When powered up, the microprocessor 81 loads and runs the instructions of these algorithms.

The random access memory 83 notably comprises:

- in a register, the operating programme of the microprocessor 81 responsible for switching on the telecommunication device 8,
- reception parameters (for example parameters for modulation, encoding, MIMO, recurrence of frames),
- transmission parameters (for example parameters for modulation, encoding, MIMO, recurrence of frames),
- incoming data corresponding to the data received and decoded by the receiver 86,
- decoded data formed to be transmitted at the interface to the application 89,
- parameters for controlling the transmittance of the optical filter 14.

Other structures of the telecommunication device 8 than those described with respect to figure 8 are compatible with the present disclosure. In particular, according to variants, the telecommunication device may be implemented according to a purely hardware realisation, for example in the form of a dedicated component (for example in an ASIC (Application Specific Integrated Circuit) or FPGA (Field-Programmable Gate Array) or VLSI (Very Large Scale Integration) or of several electronic components embedded in an apparatus or even in a form of a mix of hardware elements and software elements.

The radio interface 86 and the interface 87 are adapted for the reception and transmission of signals according to one or several telecommunication standards such as IEEE 802.11 (Wi-Fi), standards compliant with the IMT-2000 specifications (also called 3G), with 3GPP LTE (also called 4G), IEEE 802.15.1 (also called Bluetooth)...

According to a variant, the telecommunication device does not include any ROM but only RAM, the algorithms implementing the steps of the method specific to the present disclosure being stored in the RAM.

Naturally, the present disclosure is not limited to the embodiments previously described.

In particular, the present disclosure is not limited to a plenoptic optical assembly but also extends to any device integrating such a plenoptic optical assembly, for example a plenoptic camera comprising a photosensors array or a telecommunication device comprising a photosensors array.

Telecommunication devices includes, for example, smartphones, smartwatches, tablets, computers, mobile phones, portable/personal digital assistants ("PDAs"), and other devices that facilitate communication of information between end-users but also set-top-boxes.

The method and control operations of the optical filter 14 described herein may be implemented by instructions being performed by a processor, and such instructions (and/or data values produced by an implementation) may be stored on a processor-readable medium such as, for example, an integrated circuit, a software carrier or other storage device such as, for example, a hard disk, a compact diskette ("CD"), an optical disc (such as, for example, a DVD, often referred to as a digital versatile disc or a digital video disc), a random access memory ("RAM"), or a read-only memory ("ROM"). The instructions may form an application program tangibly embodied on a processor-readable medium. Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry as data the rules for writing or reading the syntax of a described embodiment, or to carry as data the actual syntax-values written by a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

**Claims**

1. A plenoptic camera (1) comprising a camera lens (10), a microlens array (11) and a photosensors array (13), **characterized in that** the camera lens (1) comprises an optical filter (14) arranged in the aperture stop plane of the camera lens (10), the optical filter (14) having a transmittance that varies spatially according to information representative of transmittance associated with the camera lens (10).

2. The plenoptic camera according to claim 1, wherein the optical filter (14) is a passive optical filter.

3. The plenoptic camera according to claim 1, wherein the optical filter (14) is a spatial light modulator (4).

4. The plenoptic camera according to claim 3, wherein the spatial light modulator (4) comprising a plurality of cells (400), the plenoptic camera further comprising a controller (103) for controlling a quantity of light passing through said cells (400) according to said information representative of transmittance associated with the camera lens (10).

5. The plenoptic camera according to one of claims 1 to 4, further comprising a memory (1032) for storing said information representative of transmittance associated with the camera lens (10).

6. The plenoptic camera according to one of claims 1 to 5, wherein, for a given point of the optical filter, the transmittance associated with the given point depends from a distance between the given point and a center of the optical filter.

7. The plenoptic camera according to claim 6, wherein the transmittance increases with the distance.

8. A method of controlling the quantity of light reaching a photosensor array of a plenoptic camera (1), the plenoptic camera comprising a camera lens (10) and a microlens array (11), **characterized in that** the method comprises controlling (71) a transmittance associated with an optical filter (14) arranged in the aperture stop plane of the camera lens (10) according to information representative of transmittance associated with the camera lens.

9. The method according to claim 8, wherein the optical filter (14) is a passive optical filter.

10. The method camera according to claim 8, wherein the optical filter (14) is a spatial light modulator (4).

11. The method according to claim 10, wherein the spatial light modulator (4) comprising a plurality of cells, the controlling comprising controlling a quantity of light passing through said cells according to said information representative of transmittance associated with the camera lens.

12. The method according to one of claims 8 to 11, further comprising storing said information representative of transmittance associated with the camera lens.

13. The method camera according to one of claims 8 to 12, wherein, for a given point of the optical filter, the transmittance associated with the given point depends from a distance between the given point and a center of the optical filter.

14. The method according to claim 13, wherein the transmittance increases with the distance.

15. A computer program product comprising instructions of program code for executing the method according to any one of claims 8 to 14, when said program is executed on a computer.

**Fig 1**

**Fig 2**

**Fig 3**

**Fig 4**

**Fig 5**

**Fig 6**

**Fig 7**

**Fig 8**

Europäisches
Patentamt

European
Patent Office

Office européen
des brevets

# EUROPEAN SEARCH REPORT

Application Number

EP 15 30 6059

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2006/039486 A2 (UNIV LELAND STANFORD JUNIOR [US]; NG YI-REN [US]; HANRAHAN PATRICK M []) 13 April 2006 (2006-04-13) | 1,2,6-9, 13-15 | INV.<br>G02B26/02<br>G02B26/08 |
| Y | * page 27, line 6 - page 32, line 6; figures 19-21 * | 3-5, 10-12 | H04N5/217<br>H04N5/225<br>H04N5/357 |
| | ----- | | |
| X | US 2014/098212 A1 (YAMANAKA YUJI [JP] ET AL) 10 April 2014 (2014-04-10) | 1,2,6-9, 13-15 | |
| Y | * the whole document * | 3-5, 10-12 | |
| | ----- | | |
| Y | US 2011/128412 A1 (MILNES THOMAS B [US] ET AL) 2 June 2011 (2011-06-02)<br>* paragraph [0006] *<br>* paragraph [0030] *<br>* paragraph [0046] *<br>* paragraph [0051] * | 3-5, 10-12 | |
| | ----- | | |
| Y | EP 2 309 718 A1 (SAMSUNG ELECTRONICS CO LTD [KR]) 13 April 2011 (2011-04-13)<br>* the whole document * | 3-5, 10-12 | |
| | ----- | | **TECHNICAL FIELDS SEARCHED (IPC)**<br><br>G02B<br>H04N<br>G03B |

The present search report has been drawn up for all claims

| Place of search | Date of completion of the search | Examiner |
|---|---|---|
| Munich | 29 September 2015 | Brandenburg, Jörg |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

...........................................................................................

& : member of the same patent family, corresponding
document

EPO FORM 1503 03.82 (P04C01)

# EP 3 112 920 A1

## ANNEX TO THE EUROPEAN SEARCH REPORT
## ON EUROPEAN PATENT APPLICATION NO.

EP 15 30 6059

This annex lists the patent family members relating to the patent documents cited in the above-mentioned European search report.
The members are as contained in the European Patent Office EDP file on
The European Patent Office is in no way liable for these particulars which are merely given for the purpose of information.

29-09-2015

| Patent document cited in search report | | | Publication date | Patent family member(s) | | | Publication date |
|---|---|---|---|---|---|---|---|
| WO 2006039486 | A2 | | 13-04-2006 | EP | 1795004 | A2 | 13-06-2007 |
| | | | | EP | 2398223 | A1 | 21-12-2011 |
| | | | | EP | 2398224 | A1 | 21-12-2011 |
| | | | | HK | 1105334 | A1 | 31-07-2015 |
| | | | | HK | 1163995 | A1 | 27-06-2014 |
| | | | | JP | 4752031 | B2 | 17-08-2011 |
| | | | | JP | 2008515110 | A | 08-05-2008 |
| | | | | KR | 20070057998 | A | 07-06-2007 |
| | | | | US | 2007252074 | A1 | 01-11-2007 |
| | | | | US | 2012019711 | A1 | 26-01-2012 |
| | | | | US | 2012019712 | A1 | 26-01-2012 |
| | | | | US | 2012300097 | A1 | 29-11-2012 |
| | | | | US | 2013033626 | A1 | 07-02-2013 |
| | | | | US | 2013169855 | A1 | 04-07-2013 |
| | | | | US | 2014028892 | A1 | 30-01-2014 |
| | | | | US | 2014049663 | A1 | 20-02-2014 |
| | | | | US | 2014204184 | A1 | 24-07-2014 |
| | | | | US | 2015029388 | A1 | 29-01-2015 |
| | | | | US | 2015156402 | A1 | 04-06-2015 |
| | | | | WO | 2006039486 | A2 | 13-04-2006 |
| US 2014098212 | A1 | | 10-04-2014 | JP | 2014095688 | A | 22-05-2014 |
| | | | | US | 2014098212 | A1 | 10-04-2014 |
| US 2011128412 | A1 | | 02-06-2011 | US | 2011128412 | A1 | 02-06-2011 |
| | | | | WO | 2011066275 | A2 | 03-06-2011 |
| EP 2309718 | A1 | | 13-04-2011 | CN | 102026011 | A | 20-04-2011 |
| | | | | EP | 2309718 | A1 | 13-04-2011 |
| | | | | JP | 2011071981 | A | 07-04-2011 |
| | | | | KR | 20110032345 | A | 30-03-2011 |
| | | | | US | 2011069324 | A1 | 24-03-2011 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013105151 A

- WO 2008026160 A1